# DEMANDE DE BREVET EUROPEEN

(11) **EP 1 811 743 A1**
(43) Date de publication de la demande: **25.07.2007**
(21) Numéro de dépôt: 07000993.1
(22) Date de dépôt: 18.01.2007
(51) Int. Cl.: H04L 29/06

(54) **Procédé de signalisation de services prioritaires et récepteur adapté à recevoir cette signalisation**

(30) Priorité: 20.01.2006 FR 0600590
(71) Demandeur: Sagem Communication S.A., 75015 Paris (FR)
(72) Inventeur: Pecqueur, Rémi, 92800 Puteaux (FR)
(74) Mandataire: Maillet, Alain

(57) **Abrégé**

L'invention vise à proposer un mécanisme de signalisation de services prioritaires qui permette à un maximum de terminaux d'en détecter la présence et de réagir rapidement de manière appropriée. Ce mécanisme se base sur un descripteur autosuffisant qui contient les informations permettant à un terminal de localiser ces services prioritaires. Ce descripteur est inséré dans le flux à destination du terminal. Ce dernier, lorsqu'il reçoit un tel descripteur l'utilise pour se connecter sur le service prioritaire décrit. Grâce à ce mécanisme, il est possible d'offrir un moyen efficace de diffuser des messages prioritaires, ces messages vont atteindre un maximum d'utilisateurs dans un délai très court.

## Description

### Domaine technique

L'invention se situe dans le domaine des récepteurs de télévision numérique et plus particulièrement dans la diffusion de services prioritaires à destination de la population.

### Art antérieur

L'augmentation récente des demandes pour l'accès à la télévision numérique a amené la communauté scientifique à développer un système de diffusion hertzien de télévision numérique : le système DVB-T (Digital Video Broadcasting Terrestrial : télévision numérique terrestre). Le système DVB-T, défini, entre autres, par les standards ETSI EN 300 744 « Digital Video Broadcasting (DVB) ; Framing structure, channel coding and modulation for digital terrestrial television. (DVB-T) », ETSI EN 300 468 « Digital Video Broadcasting (DVB); Specification for Service Information (SI) in DVB systems. DVB-SI », est une technologie qui consiste à transmettre des flux de données numériques, telles que des données audio visuelles de type télévision qui peuvent être associées à des données numériques interactives du même type que celui qui est transmis par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières d'accéder à ce type de flux de services. Cette adaptation a donné lieu au système normalisé dit DVB-H (Digital Video Broadcast-Handheld) défini par le standard ETSI EN 302 304 : « Digital Video Broadcasting (DVB); Transmission System for Handheld Terminals (DVB-H) ». Cette norme vise à permettre la diffusion de flux de services multimédias sur des terminaux mobiles qui, comme les téléphones mobiles, doivent répondre à des exigences spécifiques en terme de consommation de courant, de taille d'écran et de mobilité. Selon la norme DVB-H, les services transportés au sein d'un flux sont codés et multiplexés sur la base de la technologie MPEG-2 (Moving Picture Experts Group) système, standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

De façon à permettre la diffusion de services aux utilisateurs de terminaux par DVB-H, il faut définir des protocoles dans les couches hautes du modèle ISO. Outre les services DVB classiques comme la télévision, la radio, les applications interactives de type MHP (Multimedia Home Platform) de nouveaux services multimédia complexes seront bientôt disponibles. Ces nouveaux services peuvent tirer parti de DVB-H et d'un réseau de communication mobile et nécessitent donc des protocoles sophistiqués.

Dans le but d'exploiter la convergence entre les réseaux de diffusion de contenu, que l'on peut qualifier de classiques, comme ceux basés sur DVB (Digital Video Broadcast) et les réseaux de téléphonie mobile en plein développement, une architecture de diffusion de services numériques est proposée. Cette architecture, développée dans le cadre de DVB porte le nom de datacast IP, IPDC (IP Datacast). Cette technologie permet de diffuser des services pouvant tirer partie de différents types de réseaux à destination de terminaux dotés de plusieurs moyens de connexion.

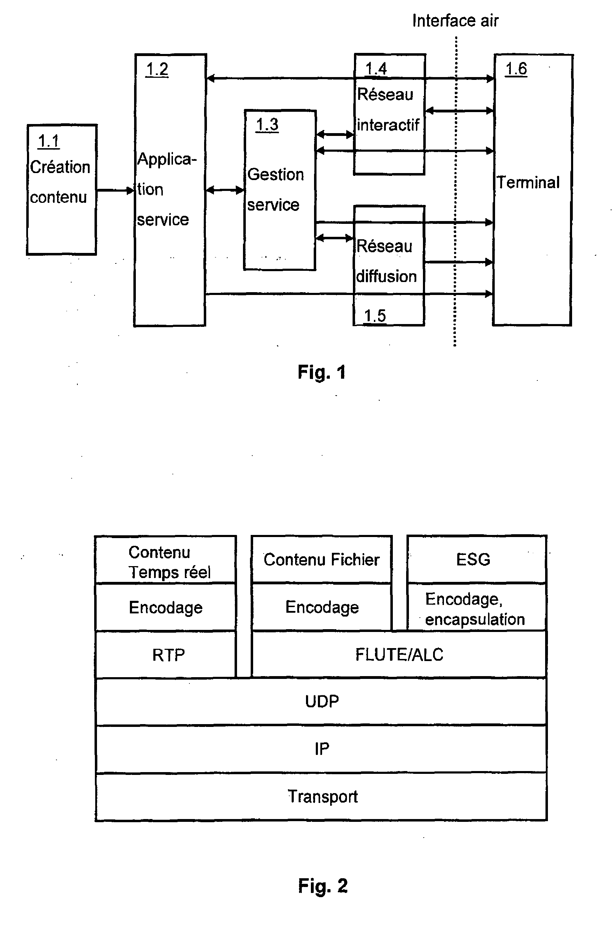

La Fig. 1 représente l'architecture de référence du datacast IP. Le cadre 1.1 représente la création du contenu qui doit être délivré au terminal 1.6. De façon à permettre une vraie convergence de réseau, il doit être possible de diffuser le contenu via plusieurs réseaux de communication différents. Ces réseaux peuvent être un réseau de diffusion 1.5 de type DVB-H diffusant du contenu DVB via le réseau hertzien à destination de terminaux mobiles ou encore un réseau de téléphonie mobile 1.4. Ce réseau de téléphonie est dit interactif car il est bidirectionnel contrairement au réseau de diffusion qui lui ne permet le transfert de données que du créateur de contenu vers le terminal. Pour gérer cette diversité des réseaux de transport, il est introduit une application de service 1.2 qui fournit un lien logique entre le fournisseur de contenu et le terminal. Cette application de service offre un guide électronique de service à l'utilisateur qui peut sélectionner les services qu'il désire consulter indépendamment du réseau de transport servant à leur diffusion. Le gestionnaire de services 1.3 est chargé d'allouer les ressources nécessaires sur les différents réseaux de transport. Il peut également se charger de la facturation des services en collaboration avec l'application de service.

La Fig. 2 représente l'architecture logicielle simplifiée du datacast IP. Au dessus des couches de transport physiques est implémenté le protocole IP (Internet Protocol). Au dessus d'IP se trouve la couche UDP (User Datagram Protocol). UDP offre un service minimal permettant de délivrer des paquets de données IP d'une source vers une destination. Il permet également la diffusion de paquets émis par une source vers une multitude de destinataires (multicast en anglais). C'est un protocole simple mais qui ne contient pas de mécanisme assurant qu'un paquet émis arrive à destination. Sa simplicité et sa rapidité le rendent particulièrement bien adapté à la diffusion de données en temps réel. D'autre part il n'implique pas, au contraire de TCP (Transmission Control Protocol) d'échanges d'acquittements entre la destination et la source. Cette propriété le rend bien adapté aux réseaux de diffusion monodirectionnels. Au dessus de ces trois couches vont être implémentés différents protocoles de diffusion de données en fonction du type de données. Pour les données de type temps réels comme la vidéo ou l'audio d'un service, ces données sont encodées puis diffusées via le protocole RTP. En ce qui concerne la diffusion de données de type fichiers comme, par exemple, des mises à jour logicielles à destination du terminal, les protocoles FLUTE/ALC (File Delivery over Unidirectional Transport / Asynchronous Layered Coding), défini dans les RFC (Request For Comments) numérotées 3926 et 3450, sont utilisés. Ces protocoles offrent la possibilité de créer des sessions permettant la diffusion de gros fichiers de données entre une source et une multitude de destination. Ces protocoles sont basés sur la diffusion IP multipoint (multicast en anglais). Pour l'application de diffusion de fichier, le simple transfert d'objet n'est pas suffisant. FLUTE apporte un mécanisme de signalisation permettant de faire correspondre des propriétés de fichiers aux concepts de ALC d'une façon qui permet au receveur d'assigner ces propriétés aux objets reçus. ALC, quant à lui, fournit un protocole de diffusion de données robuste massivement dimensionnable. Cette notion de massivement dimensionnable, dans ce contexte, signifie que le nombre de récepteurs simultanés de la diffusion peut s'échelonner de l'unité à plusieurs millions et que la taille des objets diffusés peut s'échelonner de quelques kilo octets à plusieurs centaines de giga octets, chaque récepteur pouvant initier la réception d'un objet de manière asynchrone.

Pour pouvoir recevoir une session FLUTE/ALC, un récepteur doit connaître les paramètres de transport associés à cette session. Ces paramètres nécessaires à la réception d'une session sont les suivants :
**·** l'adresse source IP
**·** le nombre de canal dans la session
**·** l'adresse de destination et le port pour chaque canal de la session
**·** l'identifiant de session de transport (TSI) associé à la session

La découverte des services disponibles dans le cadre du datacast IP s'effectue via un guide de service électronique, ESG (Electronic Service Guide). Cet ESG contient l'information relative aux services disponibles. Grâce à ces informations, l'utilisateur peut sélectionner les services qui l'intéressent et y accéder depuis son terminal. Les opérations relatives à l'ESG prennent place après que le récepteur DVB-H ait démarré et que le terminal se soit synchronisé à un flux de transport transportant des services IPDC. L'utilisateur peut sélectionner un service spécifique grâce aux informations fournies par une application d'ESG. L'ESG fournit alors les informations nécessaires au terminal pour localiser et se connecter au flux IP dans le flux de transport DVB-H.

Les opérations d'ESG peuvent se diviser en trois étapes principales. Dans une première étape, le terminal acquière la connaissance du ou des ESG disponibles et de la façon de les obtenir. Dans une seconde étape, le terminal acquière effectivement les données d'ESG pour la première fois ou après un long temps sans connexion. Tandis que dans une troisième étape, le terminal maintient la pertinence de ces informations via des mises à jour régulières.

La découverte des services s'organise de la manière suivante. Une fois que le terminal est connecté à un flux de transport DVB-H valide transportant des services IPDC, il est en mesure d'extraire des tables SI/PSI du flux les informations de localisation, c'est-à-dire le PID (Program identifier) permettant de connaître l'adresse IP des informations d'initialisation de l'ESG (appelé ESG bootstrap information en anglais). Il peut alors télécharger ces informations d'initialisation de l'ESG qui vont lui fournir le nombre d'ESG présents sur la plateforme ainsi que les informations lui permettant de les localiser. Il est donc ensuite à même de commencer l'acquisition des données de ces ESG. Ces données sont organisées en fragments transmis via des sessions FLUTE. L'ESG est donc constitué d'un ensemble de données organisé en une structure complexe dont la taille devient rapidement grande, typiquement plusieurs méga octets de donnés. Une fois que le terminal s'est connecté à toutes les sessions contenant les fragments de données d'ESG, il les rassemble et l'application d'ESG peut les présenter à l'utilisateur. La mise à jour des données d'ESG se fait en vérifiant périodiquement que de nouvelles versions desdits fragments ne sont pas disponibles.

Dans certaines circonstances, il peut être utile de diffuser des services que l'on peut qualifier de prioritaires. Ce peut être pour des raisons de sécurité nationale, d'urgence sanitaire ou autres. Dans ce cas, une autorité peut désirer diffuser un message en souhaitant que celui-ci atteigne le maximum de personnes en un minimum de temps. Ce message peut prendre la forme d'un service numérique que l'on veut diffuser à destination de tous les terminaux permettant sa réception. Le service est donc construit puis diffusé sous la forme d'une session de datacast IP. Le problème se pose de le signaler aux terminaux de façon à permettre à ceux-ci de se connecter sur cette session, de recevoir la session contenant ce service prioritaire et de le présenter aux utilisateurs. Le mécanisme standard de signalisation des services consiste en l'ESG déjà mentionné. Un ESG est typiquement constitué d'un grand nombre de données, couramment de l'ordre de 2 à 4 mégaoctets. La mise à jour des ces données se fait par téléchargement de nouveau fragments dans un processus qui s'étale dans le temps. De plus, l'implémentation des mécanismes d'ESG est optionnelle et certains terminaux peuvent ne pas être compatibles avec ces ESG. Toutes ces raisons font que l'ESG est mal adapté à la signalisation de services prioritaires.

### Exposé de l'invention

L'invention vise à proposer un mécanisme de signalisation de services prioritaires qui permette à un maximum de terminaux d'en détecter la présence et de réagir rapidement de manière appropriée. Ce mécanisme se base sur un descripteur autosuffisant qui contient les informations permettant à un terminal de localiser ces services prioritaires. Ce descripteur est inséré dans le flux à destination du terminal. Ce dernier, lorsqu'il reçoit un tel descripteur l'utilise pour se connecter sur le service prioritaire décrit.
Grâce à ce mécanisme, il est possible d'offrir un moyen efficace de diffuser des messages prioritaires, ces messages vont atteindre un maximum d'utilisateurs dans un délai très court.

L'invention concerne un procédé de signalisation d'au moins un service prioritaire au sein d'un système de diffusion de services numériques à destination de terminaux, ledit service prioritaire étant diffusé au moyen d'une session IP, ces services numériques étant diffusés au sein de flux de données numériques appelés flux de transport, ledit procédé comprenant une étape d'insertion, dans au moins un flux de transport, d'un descripteur autosuffisant contenant toutes les informations nécessaires à un terminal pour localiser et télécharger ladite session IP contenant ledit service prioritaire.

Selon un mode particulier de réalisation de l'invention, le système de diffusion étant conforme aux normes DVB, le procédé comprend une étape d'inclusion du descripteur autosuffisant dans la table INT.

Selon un mode particulier de réalisation de l'invention ledit descripteur comprend les adresses IP source et destination d'une session de transport IP.

L'invention concerne également un descripteur autosuffisant d'au moins un service prioritaire au sein d'un système de diffusion de services numériques à destination de terminaux, ledit service prioritaire étant diffusé au moyen d'une session IP, ces services numériques étant diffusés au sein de flux de données numériques appelés flux de transport, ledit descripteur étant destiné à être inséré dans ledit flux de transport et comprenant les adresses d'une ou plusieurs session IP contenant ledit service prioritaire ainsi que des informations sur les médias constituant ledit service.

L'invention concerne également un terminal de réception de services numériques au sein d'un système de diffusion de services numériques à destination de terminaux, ces services numériques étant diffusés au sein de flux de données numériques appelés flux de transport, comprenant :
- des moyens de réception d'un descripteur autosuffisant contenant toutes les informations nécessaires au terminal pour localiser et télécharger une session IP contenant un service prioritaire ; et
- des moyens de proposer ledit service prioritaire à l'utilisateur consécutivement à la réception et à l'interprétation dudit descripteur autosuffisant.

L'invention concerne également un procédé de gestion de services au sein d'un terminal d'un système de diffusion de services numériques à destination de terminaux, ces services numériques étant diffusés au sein de flux de données numériques appelés flux de transport et comprenant une étape de réception d'un descripteur autosuffisant contenant toutes les informations nécessaires au terminal pour localiser et télécharger une session IP contenant un service prioritaire et une étape de proposition dudit service prioritaire à l'utilisateur consécutivement à la réception et à l'interprétation dudit descripteur autosuffisant.

Selon un mode particulier de réalisation de l'invention le système de diffusion étant conforme aux normes DVB, l'étape de réception dudit descripteur s'intègre dans une étape de réception d'une table INT contenant ledit descripteur.

Selon un mode particulier de réalisation de l'invention l'étape de réception de la table INT comprend les étapes suivantes :
- réception d'une table PMT indiquant un changement de version de la table INT, le terminal étant en mode de réception par tranche de temps ;
- passage du terminal en mode de réception continu ;
- réception de la table INT en mode de réception continu.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente l'architecture de référence du datacast IP.
La Fig. 2 représente l'architecture logicielle du datacast IP.
La Fig. 3 représenté un exemple de descripteur de signalisation de services prioritaires selon l'invention.

### Exposé détaillé de l'invention

Dans de nombreux pays il est prévu qu'un opérateur de diffusion de services audio/vidéo, par exemple télévision ou radio, puisse interrompre ses programmes pour passer un message d'urgence. Ces messages peuvent prendre la forme de flashes spéciaux par exemple. L'utilisation de ces mécanismes étant généralement de la responsabilité des autorités du pays, celles-ci utilisant alors les médias pour avertir la population d'un évènement considéré comme important. On peut citer l'exemple d'une menace envers la sécurité nationale comme le déclenchement d'une vague d'attentats ou encore un risque sanitaire comme une pollution accidentelle. Dans ce cas il est important que la population prenne connaissance de ces évènements le plus largement et le plus rapidement possible de façon à prendre les mesures appropriées.

Dans le cadre de la télévision analogique classique ou de la radio, l'opération est relativement aisée car les programmes sont relativement peu nombreux et diffusés de manière centralisée. L'opérateur contrôle depuis les studios de diffusion le contenu qui va être reçu par l'utilisateur sur son terminal. Dans un contexte d'explosion d'offres de services numériques et de diversification des méthodes de diffusion, le problème se pose de permettre la diffusion de services prioritaires de façon à ce que ces services atteignent le plus largement et le plus rapidement possible la population.

Ce document vise à permettre l'implémentation de tels services dans le cadre de la diffusion de services DVB à destination de terminaux mobiles utilisant les technologies de datacast IP. Le processus par lequel un terminal prend connaissance de l'existence d'un nouveau service via le guide de programme est complexe et lent comme nous l'avons vu ci-dessus.

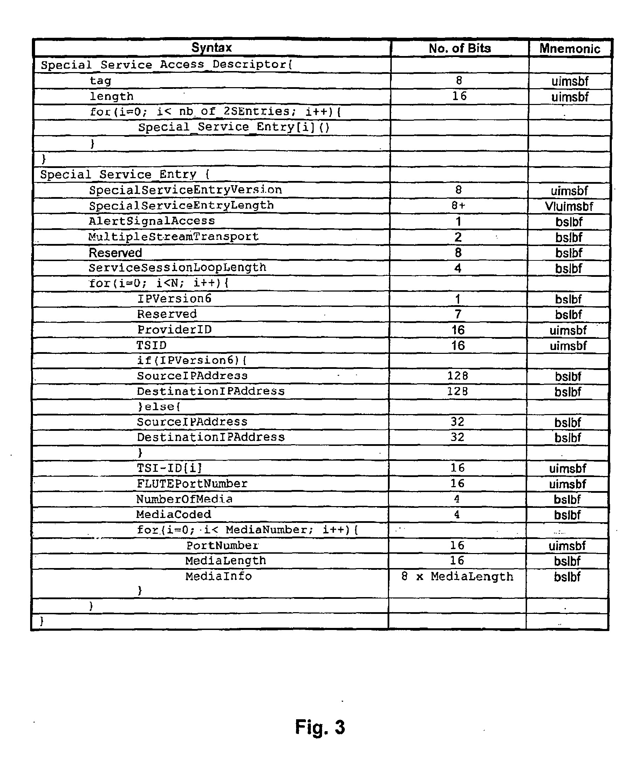

L'invention vise à résoudre ce problème de la rapidité avec laquelle un terminal va prendre connaissance de la présence d'un service prioritaire. La solution est basée sur un descripteur dont un exemple est représenté Fig. 3. Ce descripteur contient toute l'information nécessaire pour que le terminal soit à même de localiser et de charger le service prioritaire, appelé dans cet exemple service spécial.

Ce descripteur appelé « Special_Service_Access_Descriptor » contient un champ tag identifiant le descripteur et un champ « length » donnant la longueur du descripteur. Il contient ensuite le nombre correspondant d'entrées appelées « Special_Service_Entry ».

Chaque entrée du type « Special_Service_Entry » contient les champs suivants :
- « SpecialServiceEntryVersion » : doit être incrémenté de 1 lorsque le descripteur évolue de manière non compatible.
- « SpecialServiceEntryLength » : ce champ donne la longueur en octet de l'entrée « Special_Service_Entry » à l'exclusion des champs « SpecialServiceEntryVersion » et « SpecialServiceEntryLength ».
- « AlertSignalAccess » : ce champ de 1 bit indique au terminal qu'une information critique est disponible, il est propre au constructeur de terminal de déterminer la prise en charge de cette information. Par exemple : l'utilisateur peut être prévenu à l'aide d'une sonnerie.
- « MultipleStreamTransport » : permet de savoir si les services de sécurités sont diffusés sur un seul multiplexe ou plusieurs.
- « ServiceSessionLoopLength » : indique le nombre d'entrées dans la boucle des sessions.
Ensuite pour chaque session décrite, s'ensuit des paramètres spécifiques à cette session permettant de la localiser et donnant des informations sur les informations qu'elle diffuse :
- « IPVersion6 » : Ce champ binaire indique si les adresses IP utilisée sont de type IP version 4 ou IP version 6. Ces deux types d'adresses IP n'ayant pas la même longueur, cette information est indispensable pour l'analyse de la structure.
- « ProviderID » : ce champ permet d'identifier de manière unique le fournisseur du service prioritaire. Par exemple cela peut être les représentations sanitaires, l'armée, le gouvernement, un département, etc... il va permettre au terminal de nommer (numéroter) un service.
- TSID : indique le flux de transport (« Transport stream ») où trouver les informations.
- « SourceIPAdsress » : indique l'adresse IP de la source de la session FLUTE.
- « DestinationIPAddress » : indique l'adresse IP destination de la session FLUTE.
- « TSI-ID » : indique le champs TSI (Transport Session Identifier) de la session FLUTE. Si ce champ est à 0, le numéro de port doit également être à 0 et cela indique que le protocole FLUTE n'est pas utilisé.
- « FLUTEPortNumber » : indique le numéro de port de la session FLUTE.
- « NumberOfMedia » : indique le nombre de médias transportés par la session. Ce champ ne sert que si le programme est transmis hors session FLUTE, dans le cas contraire cette information est contenue dans la session FLUTE.
- « MediaCoded » : indique le type d'encodage du média. Ce champ ne sert que si le programme est transmis hors session FLUTE, dans le cas contraire cette information est contenue dans la session FLUTE.

Et pour chaque media présent dans la session :
**·** « PortNumber » : spécifie le numéro de port associé. Ce champ ne sert que si le programme est transmis hors session FLUTE, dans le cas contraire cette information est contenue dans la session FLUTE.
**·** « MediaLength » : indique la taille du champ MediaInfo. Ce champ ne sert que si le programme est transmis hors session FLUTE, dans le cas contraire cette information est contenue dans la session FLUTE.
**·** « MediaInfo » : indique des attributs du média. Ce champ ne sert que si le programme est transmis hors session FLUTE, dans le cas contraire cette information est contenue dans la session FLUTE.

Ce descripteur permet donc d'identifier de manière complète un ou des services spéciaux prioritaires. Un tel descripteur peut dans un mode de réalisation de cette présente invention, être transmis dans le flux via une table du système SI/PSI. On peut prévoir, par exemple, d'inclure ce descripteur dans la PAT (Program Association Table) ou la PMT (Program Map Table) car ces tables sont envoyées dans le flux de manière périodique, généralement toutes les 100 ms ou dans l'INT (IP/MAC Notification Table) comme expliqué ci dessous. De cette façon on est assuré que les terminaux recevront le descripteur de services prioritaires dans ce délai.

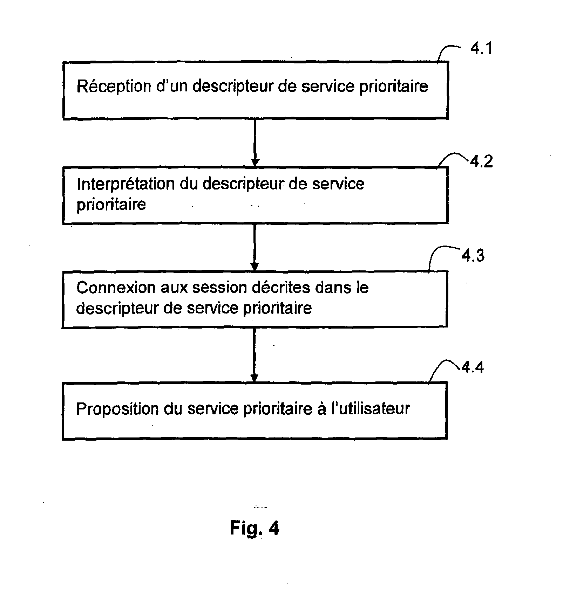

Le mécanisme général de fonctionnement du terminal selon un mode de réalisation de l'invention est décrit Fig. 4. Dans une première étape 4.1, le terminal reçoit un descripteur autosuffisant décrivant un service prioritaire. Dans une seconde étape 4.2, le terminal interprète ce descripteur et y trouve les informations de localisation du, ou des, services prioritaires. Dans une étape 4.3, il se connecte à ces sessions pour pouvoir télécharger ce, ou ces, services. Et finalement, dans une étape 4.4, il peut proposer à l'utilisateur de basculer vers ce service prioritaire.

Dans un mode de réalisation de cette invention, le descripteur peut être disponible dans l'INT. L'INT est transmise au maximum toutes les 30 secondes. Les terminaux mobiles fonctionnent généralement dans un mode dit par tranche de temps (« time slice » en anglais). Dans ce mode, le terminal gère des tranches de temps alternées pendant lesquelles il est actif et reçoit des données et des tranches de temps pendant lesquelles il éteint sa partie radio. Les données indispensables à la transmission sont alors transmises sous la forme de rafales de paquets de données. Dans ce mode, la réception de la table INT n'est pas garantie. Le terminal n'a que peu de chances de savoir qu'un service a changé en ne regardant que l'INT. Néanmoins, le fait d'avoir une nouvelle version de l'INT, contenant donc le descripteur selon l'invention, implique que la version de la PMT qui lui est associé a changé. Le champ INT_versionning de cette PMT indiquera au terminal qu'une nouvelle INT est disponible. Comme la PMT est transmise au maximum toutes les 100 ms, n'importe quelle rafale (« burst » en anglais) de paquets de données comprend au moins une PMT. En effet, la durée d'une rafale est de l'ordre de 200 ms. Le terminal détectant la présence d'une nouvelle version de la table INT grâce au changement de la PMT passe alors d'un mode en tranche de temps à un mode de réception continue afin d'obtenir la nouvelle version d'INT. Une fois celle-ci obtenu, il reprendra le mode en tranche de temps sur le ou les PIDs contenant la, ou les, sessions IP transportant le service prioritaire. De cette manière, l'insertion du descripteur décrivant le ou les services prioritaires dans l'INT provoque un changement de version de cette INT. Ce changement de version est indiqué dans la PMT, celle-ci est transmise rapidement au terminal qui s'aperçoit que la version d'INT a changé. Le terminal change alors de mode de réception pour recevoir la nouvelle INT, il détecte alors la présence du descripteur de service prioritaire au sein de celle-ci. Il se connecte alors à la session décrite dans le descripteur de manière à télécharger le service prioritaire et à être en mesure de proposer à l'utilisateur ce service prioritaire.

Dès qu'un terminal reçoit une table contenant ce descripteur, il en déduit la présence de services prioritaires et entreprend de se connecter à ces services en utilisant les informations contenues dans le descripteur. Ces informations identifient les numéros de PIDs correspondants aux adresses IP. Le terminal s'abonne à ces PIDs et attend la réception de paquets MPE (Multi Protocol Encapsulation) servant à transporter les paquets IP.

Dans un mode particulier de réalisation, si « NumberOfMedia » = 0 et si «FLUTEPortNumber » est différent de 0, alors le terminal doit se connecter en mode FLUTE afin de recevoir le fichier SDP diffuser sur ce canal. Ainsi l'unique fichier SDP disponible à cette adresse permet de sélectionner le bon PID avec l'adresse IP contenu dans celui-ci.

Dans un deuxième mode particulier de réalisation, si « NumberOfMedia » est différent de 0 et si « FLUTEPortNumber » = 0, alors le terminal doit se connecter en mode classique et utiliser la description de mcdia pour décoder le service prioritaire à l'adresse IP et sur le ou les ports associés. Dès que le terminal est en mesure d'afficher le service prioritaire, il interrompt le service courant et affiche le service prioritaire ou tout autre interface utilisateur permettant de gérer le service.

Cette transmission, basée sur un descripteur autosuffisant, peut donc être indépendante du mécanisme d'ESG et/ou du mécanisme FLUTE (content delivery protocol for FLUTE), mécanismes optionnels. Le lecteur comprendra que ces deux mécanismes sont inutiles si le terminal utilise uniquement la voie interactive (GSM/GPRS/UMTS) pour obtenir les services spéciaux. Elle va donc atteindre tous les terminaux connectés à un flux DVB contenant des services IPDC indépendamment du fait qu'ils implémentent l'ESG ou pas. Cette transmission se fait en un temps très court, le seul délai introduit étant le délai entre deux transmissions successives des tables SI/PSI.

## Revendications

1. Procédé de signalisation d'au moins un service prioritaire au sein d'un système de diffusion de services numériques à destination de terminaux, ledit service prioritaire étant diffusé au moyen d'une session IP, ces services numériques étant diffusés au sein de flux de données numériques appelés flux de transport **caractérisé en ce qu'**il comprend l'étape suivante :
- l'insertion, dans au moins un flux de transport, d'un descripteur autosuffisant contenant toutes les informations nécessaires à un terminal pour localiser et télécharger ladite session IP contenant ledit service prioritaire.

2. Procédé selon la revendication 1 où, le système de diffusion étant conforme aux normes DVB, comprenant une étape d'inclusion du descripteur autosuffisant dans la table INT.

3. Procédé selon la revendication 2 où ledit descripteur comprend les adresses IP source et destination d'une session de transport IP.

4. Descripteur autosuffisant d'au moins un service prioritaire au sein d'un système de diffusion de services numériques à destination de terminaux, ledit service prioritaire étant diffusé au moyen d'une session IP, ces services numériques étant diffusés au sein de flux de données numériques appelés flux de transport, ledit descripteur étant destiné à être inséré dans ledit flux de transport **caractérisé en ce qu'**il comprend les adresses d'une ou plusieurs session IP contenant ledit service prioritaire ainsi que des informations sur les médias constituant ledit service.

5. Terminal de réception de services numériques au sein d'un système de diffusion de services numériques à destination de terminaux, ces services numériques étant diffusés au sein de flux de données numériques appelés flux de transport, **caractérisé en ce qu'**il comprend :
- des moyens de réception d'un descripteur autosuffisant contenant toutes les informations nécessaires au terminal pour localiser et télécharger une session IP contenant un service prioritaire ; et
- des moyens de proposer ledit service prioritaire à l'utilisateur consécutivement à la réception et à l'interprétation dudit descripteur autosuffisant.

6. Procédé de gestion de services au sein d'un terminal d'un système de diffusion de services numériques à destination de terminaux, ces services numériques étant diffusés au sein de flux de données numériques appelés flux de transport **caractérisé en ce qu'**il comprend au moins les étapes suivantes :
- une étape (4.1) de réception d'un descripteur autosuffisant contenant toutes les informations nécessaires au terminal pour localiser et télécharger une session IP contenant un service prioritaire ; et
- une étape de proposition (4.4) dudit service prioritaire à l'utilisateur consécutivement à la réception et à l'interprétation dudit descripteur autosuffisant.

7. Procédé selon la revendication 6 où, le système de diffusion étant conforme aux normes DVB, l'étape de réception dudit descripteur s'intègre dans une étape de réception d'une table INT contenant ledit descripteur.

8. Procédé selon la revendication 7 où l'étape de réception de la table INT comprend les étapes suivantes :
- réception d'une table PMT indiquant un changement de version de la table INT, le terminal étant en mode de réception par tranche de temps ;
- passage du terminal en mode de réception continu ;
- réception de la table INT en mode de réception continu.
